# EUROPEAN PATENT APPLICATION

(11) **EP 4 570 418 A1**
(43) Date of publication of application: **18.06.2025**
(21) Application number: 23843300.7
(22) Date of filing: 17.07.2023
(51) Int. Cl.: B23K 26/382, B23K 26/064, B23K 26/0622, B23K 103/00

(54) **MICRO-PROCESSING DEVICE AND METHOD USING LASER**

(30) Priority: 18.07.2022 KR 20220088520
(71) Applicant: Iti Co., Ltd., Gyeonggi-do 14118 (KR)
(72) Inventor: LEE, Seak Joon, Uiwang-si, Gyeonggi-do 16042 (KR)
(74) Representative: Petraz, Gilberto Luigi
(86) International application number: PCT/KR2023/010193
(87) International publication number: WO 2024/019452

(57) **Abstract**

The present invention relates to a micro-processing device and method using a laser, the device comprising: a laser beam emission unit for forming a processed hole by emitting a laser beam at a crystallized object to be processed through which the laser beam passes; an optical unit for adjusting the shape of the laser beam so as to locally emit the laser beam at the inside of the object to be processed, thereby de-crystallizing the crystallized object to be processed; a laser beam adjustment unit for adjusting the pulse width and the pulse energy of the laser beam; and a chemical reactor for chemically removing, through a chemical reaction, the processed hole formed in a non-crystallized area of the object to be processed that is precipitated in a reaction solution accommodated inside the chemical reactor, wherein the processed hole is processed such that the thickness of the object to be processed is several times to tens of thousand times proportionally greater than the diameter of the processed hole, and thus an ultra-micro three-dimensional shape and a very narrow hole in which the thickness of the object to be processed is several times to tens of thousand times proportionally greater than the diameter of the processed hole can be formed inside the crystallized object to be processed while cracks or damage to the object to be processed is minimized.

## Description

### [Technical Field]

The present invention relates to a micro-processing device and a micro-processing method, and more specifically, to a micro-processing device and a micro-processing method using laser, which processes a surface and/or an inside of a processing object using the laser.

### [Background Art]

In general, since a transparent ceramic material such as glass, quartz, sapphire, or the like has characteristics such as brittleness, chemical resistance, amorphous property, non-conductivity, or the like, a micro-processing method is very limited, and in particular, in the case of a micro-shape, only a small number of processing processes such as laser processing using a microwave laser are applied.

However, even in the case of such laser processing, it is not easy to develop an effective processing method for a ceramic material due to problems such as occurrence of cracks or increase in shape error.

Accordingly, in the related art, a method for processing grooves or cracks through irradiation of laser to a ceramic material and micro-processing by etching a processed portion using a reaction solution has been used.

For example, the following Patent Document 1 discloses a processing method in which laser irradiated through a glass, which is a processing material, indirectly processes a processing material by heating a metal ion electrolyte located on a rear surface of the processing material, as a process using laser-wet rear etching in glass-shaped processing.

The following Patent Document 2 discloses a configuration of a glass-shaped processing device in which, when a glass is indirectly processed using laser, an irradiation path for irradiating the laser is set in a point unit or a line unit, and the point unit or the line unit is set to be randomly distributed to prevent the setting of a repeated irradiation path of a specific pattern, and the interaction between the laser and bubbles is reduced to increase processing precision.

Therefore, there is a demand for the development of a technology capable of micro-processing a transparent ceramic material such as glass, quartz, sapphire, or the like into a desired shape without damage by using laser and an etching method.
(Patent Document 1) Korean Patent Registration No. 10-1625948 (published on May 31, 2016)
(Patent Document 2) Korean Patent Registration No. 10-2382471 (published on April 4, 2022)

### [Disclosure]

### [Technical Problem]

To solve the above-described problem, an object of the present invention is to provide a micro-processing device and a micro-processing method using laser, which may micro-process a processing hole in a desired shape without damage to a processing object by using a laser beam and a reaction solution that causes a chemical reaction with the processing object.

### [Technical Solution]

To achieve the above object, a micro-processing device using laser according to the present invention includes: a laser beam irradiation unit which forms a processing hole by irradiating a crystallized processing object, through which the laser beam passes, with a laser beam; an optical unit which adjusts a shape of the laser beam such that the crystallized processing object is de-crystallized by the laser beam locally irradiated into the processing object; a laser beam adjustment unit which adjusts a pulse width and pulse energy of the laser beam; and a chemical reaction furnace which chemically removes the processing hole, which is formed in a de-crystallized region of the processing object precipitated in a reaction solution accommodated therein, through a chemical reaction, in which the processing hole is processed such that a ratio of a thickness of the processing object to a diameter of the processing hole is several times to tens of thousands of times.

To achieve the above object, a micro-processing method using laser according to the present invention includes: (a) forming a processing hole by irradiating a crystallized processing object, through which the laser beam passes, with a laser beam, using a laser beam irradiation unit; (b) adjusting a shape of the laser beam such that the crystallized processing object is de-crystallized by the laser beam locally irradiated into the processing object, using an optical unit; (c) adjusting a pulse width and pulse energy of the laser beam using a laser beam adjustment unit; and (d) precipitating the processing object in a chemical reaction furnace in which the reaction solution is accommodated to chemically remove the processing hole, which is formed in a de-crystallized region, through a chemical reaction caused by the reaction solution, in which the processing hole is processed such that a ratio of a thickness of the processing object to a diameter of the processing hole is several times to tens of thousands of times.

### [Advantageous Effects]

As described above, according to the micro-processing device and the micro-processing method using laser according to the present invention, it is possible to irradiate a processing object formed of a crystallized material, through which the laser beam passes, with a laser beam having high energy per unit volume and a very short pulse width and to de-crystallize the inside of the crystallized processing object while the laser beam is absorbed into the processing object.

Thus, according to the present invention, by increasing a reaction speed at which a chemical reaction with a reaction solution such as a strongly acidic or strongly basic chemical substance is performed in the de-crystallized region, the processing hole formed in the processing object may be chemically removed through the chemical reaction, so that it is possible to process a micro-pattern using the micro-processing hole.

Thus, according to the present invention, it is possible to process an extremely narrow hole having a very fine three-dimensional shape and a ratio of a thickness of the processing object to a diameter of the processing hole, which is several times to several tens of thousands of times, in the crystallized processing object while minimizing cracks or damage of the processing object.

### [Description of Drawings]

FIG. 1 is a configuration view of a micro-processing device using laser according to the preferred embodiment of the present invention.
FIG. 2 is an exemplary view in which a processing object prepared as a solid is classified according to regularity of arrangement.
FIG. 3 is a flowchart for explaining a micro-processing method using laser step by step according to the preferred embodiment of the present invention.
FIG. 4 is an exemplary view of a processing object that is micro-processed according to the preferred embodiment of the present invention.
FIG. 5 is an exemplary view of a processing object that is micro-processed according to another embodiment of the present invention.
FIG. 6 is an exemplary view of a processing object that is micro-processed according to the present invention.

### [Mode for Invention]

Hereinafter, a micro-processing device and a micro-processing method using laser according to the preferred embodiment of the present invention will be described in detail with reference to the accompanying drawings.

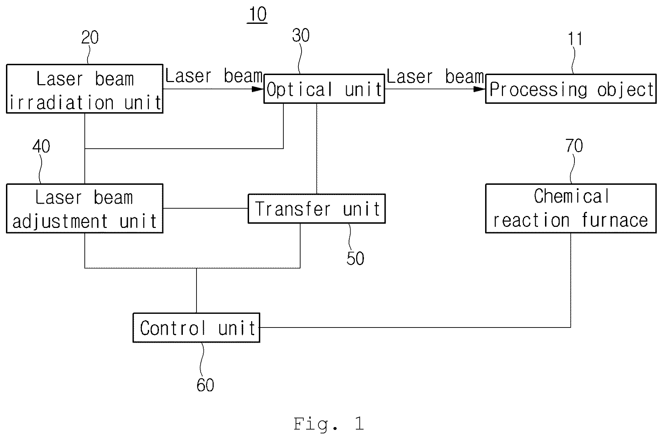

FIG. 1 is a configuration view of the micro-processing device using laser according to the preferred embodiment of the present invention.

Hereinafter, terms indicating directions such as "left", "right", "front", "rear", "upward", and "downward" are defined to indicate respective directions based on a state illustrated in each drawings.

In the present embodiment, a configuration of the micro-processing device and the micro-processing method using laser, which forms a pattern having a fine shape on a surface and/or an inside of a processing object having a predetermined area and thickness will be described.

In addition, in the present embodiment, the processing of the processing object formed of a transparent ceramic material such as glass, quartz, sapphire, or the like is described, but the present invention is not necessarily limited thereto, and it should be noted that the present invention may be modified to process processing objects formed of various materials such as silicon, metal, and the like.

Such a processing object may be in a de-crystallized state, but in the present embodiment, it will be described that a micro-pattern is processed on a surface or an inside of the processing object in a state where the processing object is de-crystallized by irradiating the crystallized processing object with a laser beam, and then the processed region is removed at a high speed through a chemical reaction caused by using a reaction solution such as a strongly acidic or strongly basic chemical substance.

That is, when a laser beam having high energy per unit volume and a very short pulse width is irradiated to a crystallized material, which allows the laser beam to pass therethrough, the surface and/or the inside of the material absorbs the energy of the laser beam and is de-crystallized.

In the crystallized material, the strong acid and strong base used as the reaction solution are removed very slowly by a very slow chemical reaction.

On the other hand, in the de-crystallized material, a region processed by a chemical reaction with the strong acid or the strong base may be removed at a very high speed.

A difference in the reaction speed varies depending on the type, concentration, and process of the chemical used as the material and the reaction solution, but the speed difference may occur several times to tens of thousands of times.

Accordingly, the present invention may form a micro-pattern in a state where a laser beam is irradiated to a crystallized material and de-crystallized, and may micro-process the crystallized material at a high speed through the chemical reaction using the reaction solution.

In addition, the present invention may process an extremely narrow hole having a ratio of a thickness of the processing object to a diameter of the processing hole, which is several times to tens of thousands of times while minimizing cracks or damage to the processing object.

To this end, as shown in FIG. 1, a micro-processing device 10 using laser according to the preferred embodiment of the present invention includes: a laser beam irradiation unit 20 which forms a micro-pattern using a processing hole by irradiating a crystallized processing object 11, through which the laser beam passes, with a laser beam; an optical unit 30 which adjusts a shape of the laser beam such that the crystallized processing object 11 is de-crystallized by the laser beam locally irradiated into the processing object 11; a laser beam adjustment unit 40 which adjusts a pulse width and pulse energy of the laser beam; and a chemical reaction furnace 70 which performs chemical removal along the processing hole through a chemical reaction in a de-crystallized region of the processing object 11 that is precipitated in a reaction solution accommodated therein, and thus the processing hole is processed at a high speed that is several times to tens of thousands of times faster than the crystallized processing object 11 such that a ratio of a thickness of the processing object 11 to a diameter of the processing hole is several times to tens of thousands of times.

In addition, the micro-processing device 10 using laser according to the preferred embodiment of the present invention may further include a transfer unit 50 which moves the laser beam along the micro-pattern to be formed and a control unit 60 which controls driving of each unit.

The transfer unit 50 serves to move the laser beam output through the optical unit 30 along the shape to be processed.

To this end, the transfer unit 50 may be configured to move only the optical unit 30 or to move the laser beam irradiation unit 20, the optical unit 30, and the laser beam adjustment unit 40 as a whole.

The control unit 60 generates a control signal for controlling the driving of the laser beam irradiation unit 20 and the optical unit 30 so as to irradiate the laser beam by changing the shape of the laser beam, and the pulse width and pulse energy of the laser beam based on a processing condition of the processing object 11.

Then, the laser beam adjustment unit 40 may drive the laser beam irradiation unit 20 and the optical unit 30 according to the control signal of the control unit 60.

The processing object 11 may be formed of a transparent ceramic material such as glass, quartz, or sapphire. Obviously, the processing object 11 may be formed of silicon or a metal material.

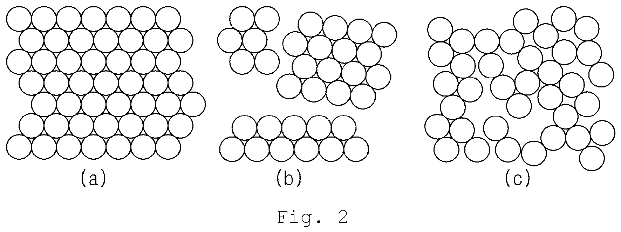

For example, FIG. 2 is an exemplary view in which the processing object prepared as a solid is classified according to regularity of arrangement.

FIGS. 2(a) to 2(c) illustrate examples of a single crystallized processing object, a polycrystallized processing object, and a de-crystallized processing object, respectively.

The processing object 11, which is formed of glass, quartz, sapphire, silicon, a metal material, or the like, is usually present in a single crystal or polycrystalline state as shown in FIG. 2(a) or 2(b).

When a laser beam having high energy per unit volume and a very short pulse width is irradiated to the crystallized processing object 11, the processing object 11 may be de-crystallized as shown in FIG. 2(c).

In addition, the de-crystallized region of the processing object 11 may be removed at a very high speed, for example, a speed that is several times to several tens of thousands of times faster than a reaction speed in the crystallized state, by a chemical reaction with a reaction solution such as a strongly acidic or strongly basic chemical substance.

To this end, the laser beam irradiation unit 20 may be provided as a laser beam generator that generates a laser beam according to the control signal of the control unit 60.

The optical unit 30 may include one or more lenses that focus the laser beam generated by the laser beam irradiation unit 21 to irradiate the focused laser beam toward the processing object 11, and adjust the shape of the laser beam.

Therefore, in order to locally de-crystallize the surface and/or the inside of the crystallized processing object 11 which allows the laser beam to pass therethrough, the laser beam may be irradiated to the crystallized processing object 11 to have high energy per unit volume and a very short pulse width.

For example, the laser beam may be irradiated at a pulse width of about 10-4 seconds to about 10-15 seconds and an energy of about 10 µJ to about 100 µJ/µm3, and may locally de-crystallize the inside of the crystallized processing object 11 without passing through the processing object 11.

Alternatively, the laser beam may locally crystallize the inside of the crystallized processing object 11 with a pulse width of about 10-4 seconds to 10-18 seconds.

That is, the energy per unit volume and the pulse width may be adjusted according to various conditions such as the material, thickness, size, and the like, of the processing object 11 such that the crystallized processing object 11 may be locally de-crystallized by the laser beam.

Meanwhile, the control unit 60 may control the driving of the chemical reaction furnace 70 to activate a reaction solution such as a strongly acidic or strongly basic chemical substance in the de-crystallized region of the processing object 11 on which the micro-pattern is formed by using the laser beam.

The chemical reaction furnace 70 is provided as a container in which the reaction solution is accommodated, and may include at least one of an ultrasonic vibrator (not shown) and a heating unit (not shown) driven according to the control signal of the control unit 60.

That is, the control unit 60 may generate a control signal for controlling the driving of the ultrasonic vibrator to adjust a cycle, intensity, and direction of ultrasonic vibration generated in the chemical reaction furnace 70 according to an output of the laser beam irradiated by the laser beam irradiation unit 20.

In this case, the ultrasonic vibration may be applied in a direction parallel to a direction of the processing hole formed in the processing object 11. Alternatively, the ultrasonic vibration may be applied in a direction perpendicular to the direction of the processing hole formed in the processing object 11.

In addition, in order to heat and activate the reaction solution, the control unit 60 may generate a control signal for controlling the driving of the heating unit to heat the reaction solution and a heating object to a preset temperature.

The preset temperature may be set to correspond to a melting point of a chemical component included in the reaction solution.

Thus, the transfer unit 50 may move an irradiation position of the laser beam.

Obviously, the present invention may also perform micro-processing by chemically removing the processing hole formed in the processing object by spraying the reaction solution onto the processing object, instead of removing the chemical reaction furnace and precipitating the processing object in the reaction solution.

As described above, the present invention may irradiate a processing object formed of a crystallized material, through which the laser beam passes, with a laser beam having high energy per unit volume and a very short pulse width, and may de-crystallize the inside of the crystallized processing object while the laser beam is absorbed into the processing object.

Thus, according to the present invention, by increasing a reaction speed at which a chemical reaction with a reaction solution such as a strongly acidic or strongly basic chemical substance is performed in the de-crystallized region, the processing hole formed in the processing object may be chemically removed through the chemical reaction, so that it is possible to process a micro-pattern using the micro-processing hole.

Accordingly, the present invention may process a very narrow hole, which has a very fine three-dimensional shape and a ratio of a thickness of the processing object to a diameter of the processing hole that is several times to tens of thousands of times, inside the crystallized object while minimizing cracks or damage to the processing object.

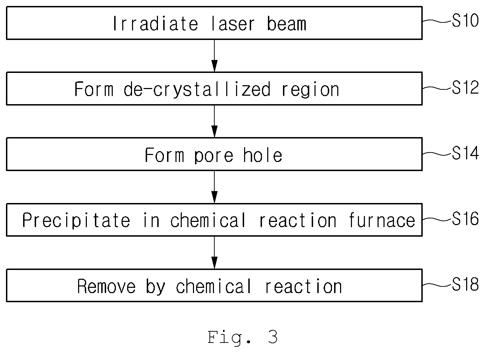

Next, a micro-processing method using laser according to the preferred embodiment of the present invention will be described in detail with reference to FIGS. 3 to 5.

FIG. 3 is a flowchart for explaining the micro-processing method using laser according to the preferred embodiment of the present invention.

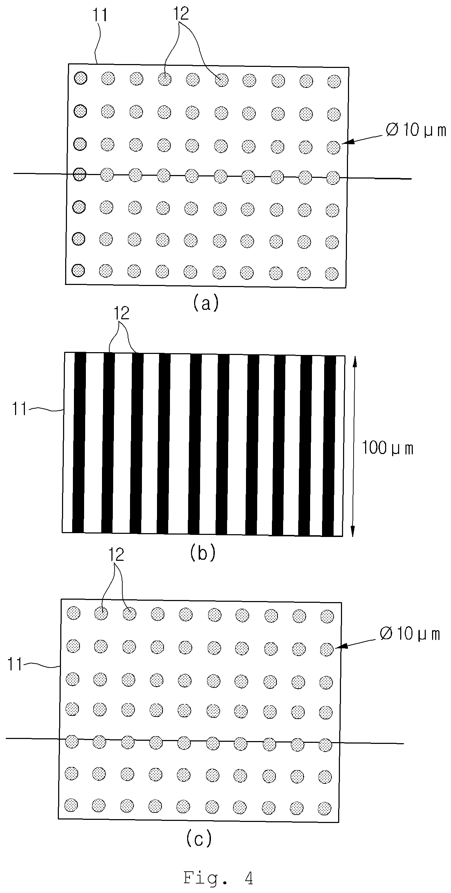

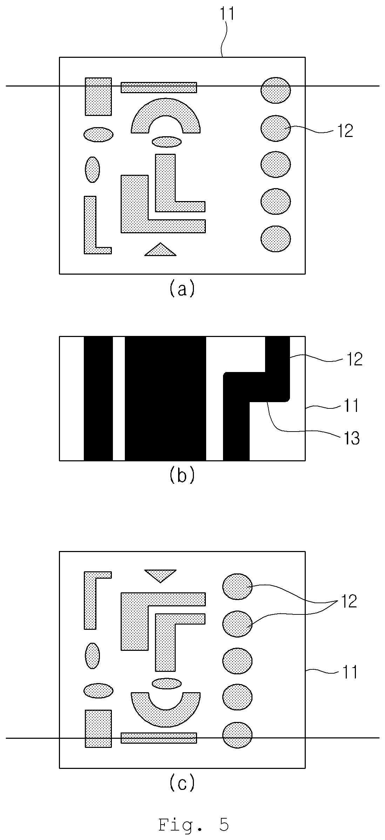

FIG. 4 is an exemplary view of a processing object that is micro-processed according to the preferred embodiment of the present invention, and FIG. 5 is an exemplary view of a processing object that is micro-processed in a three-dimensional shape according to another embodiment of the present invention. FIGS. 4(a) to 4(c) show a plane, a cross-section, and a bottom surface of the processing object that is micro-processed, and FIGS. 5(a) to 5(c) show a plane, a cross-section, and a bottom surface of the processing object that is micro-processed in a three-dimensional shape.

In step S10 of FIG. 3, the laser beam irradiation unit 20 generates a laser beam with an output that is set according to the control signal of the control unit 60 and irradiates the processing object 11 with the laser beam. Then, the optical unit 30 adjusts the processing object in the shape of the irradiated laser beam.

In this case, the laser beam may be a laser beam having high energy per unit volume and a very short purse width.

Then, the irradiated laser beam is absorbed into the processing object 11 and de-crystallizes the inside of the processing object 11 to form a de-crystallized region (S12).

In addition, in step S14, the laser beam may form one or more processing holes in the de-crystallized region to form a micro-pattern.

The processing hole may have a very fine three-dimensional shape, but may be formed as a very narrow hole having a ratio of a thickness of the processing object 11 to a diameter of the processing hole, which is several times to tens of thousands of times.

For example, as shown in FIG. 4, the processing hole 12 may be formed in a linear shape directed from one surface of the processing object 11 to which the laser beam is irradiated, for example, an upper surface, to an opposite surface, that is, a lower surface.

In addition, the processing hole 12 may be formed not only in a linear shape, but also including one or more right-angled portions 13 or horizontal portions horizontally formed in parallel to the surface of the processing object 11 as shown in FIG. 5.

Further, the processing hole 12 may be formed not only in a linear shape perpendicular to the surface of the processing object 11, but also inclined by a preset angle.

As described above, the processing hole 12 may be formed in various three-dimensional shapes according to a micro-pattern to be formed.

In particular, the processing hole 12 may have a substantially circular cross-section, but may have a substantially elliptical cross-section as well as a circular cross-section depending on the direction in which the ultrasonic vibration is applied.

As described above, in a process of forming the micro-pattern, the control unit 60 controls the driving of the laser beam irradiation unit 20 and the optical unit 30 such that the laser beam is irradiated by changing the shape of the laser beam, and the pulse width and pulse energy of the laser beam based on a processing condition of the processing object 11.

When the micro-pattern forming operation is completed, the processing object 12 is precipitated in the chemical reaction furnace 70 in which the reaction solution is accommodated in step S16.

In step S18, the processing hole 12 is chemically removed by the chemical reaction with the reaction solution in the de-crystallized region of the processing object 11 precipitated in the chemical reaction furnace 70, and micro-processed at a high speed.

In this case, the ultrasonic vibrator provided in the chemical reaction furnace 70 may be driven according to the control signal of the control unit 60 to apply the ultrasonic vibration to the processing object 11 at a preset cycle.

In addition, the control unit 60 may control the driving of the ultrasonic vibrator to adjust a cycle, intensity, and direction of ultrasonic vibration generated in the chemical reaction furnace 70 according to an output of the laser beam irradiated by the laser beam irradiation unit 20.

In this case, the ultrasonic vibration may be applied in a direction parallel to the direction of the processing hole 12 formed in the processing object 11 or a direction perpendicular to the direction of the processing hole 12.

In addition, in order to heat and activate the reaction solution, the heating unit provided in the chemical reaction furnace may be driven according to the control signal of the control unit to heat the reaction solution and the heating object to a preset temperature.

To this end, the control unit 60 may generate a control signal for controlling the driving of the heating unit to heat the reaction solution and the heating object to the preset temperature.

In addition, the preset temperature may be set to correspond to a melting point of a chemical component included in the reaction solution.

Obviously, the processing object 11 may spray the reaction solution using a spray nozzle, and may be micro-processed by the chemical reaction.

Through the process as described above, the present invention may irradiate a processing object formed of a crystallized material, through which the laser beam passes, with a laser beam having high energy per unit volume and a very short pulse width, and may de-crystallize the inside of the crystallized processing object while the laser beam is absorbed into the processing object.

Thus, according to the present invention, by increasing a reaction speed at which a chemical reaction with a reaction solution such as a strongly acidic or strongly basic chemical substance is performed in the de-crystallized region, the processing hole formed in the processing object may be chemically removed through the chemical reaction, so that it is possible to process a micro-pattern using the micro-processing hole.

Accordingly, the present invention may process a very narrow hole, which has a very fine three-dimensional shape and a ratio of a thickness of the processing object to a diameter of the processing hole that is several times to tens of thousands of times, inside the crystallized object while minimizing cracks or damage to the processing object.

### [Example 1]

The processing object 11 was formed of quartz having a thickness of about 0.1 mm, and the laser beam irradiation unit 20 irradiated a pico second UV laser beam capable of generating an output of about 100 W.

A pulse width of the laser beam was 1 ps, the laser beam adjustment unit 40 set an over rate at which laser beams overlap each other to about 50%, and the laser beam processed the inside of the processing object 11 to have a diameter of about 10 µm.

In addition, only the processing hole 12 formed in a portion processed by the laser beam, that is, the de-crystallized region, was chemically removed using a strongly acidic reaction solution such as sulfuric acid (H2SO4) or hydrochloric acid (HCl).

Accordingly, it can be confirmed that the processing hole 12 is micro-processed in the processing object 11 as shown in FIG. 4(a) to 4(c).

### [Example 2]

The processing object 11 was formed of sapphire having a thickness of about 1 mm, and the laser beam irradiation unit 20 irradiated femto second UV laser capable of generating an output of about 30 W.

A pulse width of the laser beam was 10 fs, the laser beam adjustment unit 40 set an over rate at which laser beams overlap each other to about 80%, and the laser beam processed the inside of the processing object 11 to have a diameter of about 30 µm.

In addition, only the micro-pattern formed by the de-crystallization region was chemically removed using a strongly basic reaction solution such as sodium hydroxide (NaOH) or barium hydroxide (Ba(OH)2.

Accordingly, it can be confirmed that the processing hole 12, which is implemented such that a ratio of the thickness to the diameter of the hole is 30:1, is micro-processed in the processing object 11.

### [Example 3]

The processing object 11 was formed of a silicon wafer having a thickness of about 730 µm, and the laser beam irradiation unit 20 irradiated a femto second UV laser beam capable of outputting an output of about 30 W.

A pulse width of the laser beam was 30 fs, the laser beam adjustment unit set an over rate at which laser beams overlap each other to about 10%, and the laser beam processed the inside of the processing object to have a diameter of about 7 µm.

In addition, by chemically removing only the micro-pattern formed in the de-crystallized region using a strong acid solution, it can be confirmed that the processing hole 12, which is implemented such that a ratio of the thickness to the diameter of the hole is 100:1, is micro-processed in the processing object 11.

Meanwhile, in the above embodiments, it has been described that the linear fine holes are processed in the processing object, but the present invention is not necessarily limited thereto, and the micro-patterns of various three-dimensional shapes as well as the linear fine holes may be processed.

As shown in FIG. 5, the processing object 11 was formed of glass having a width, a length, and a thickness of about 50 mm, and the laser beam irradiation unit 20 irradiated a nano second laser beam having a deep UV wavelength capable of generating an output of about 10 W.

In addition, the laser beam adjustment unit 40 adjusted the wavelength, pulse width, and beam mode of the laser beam according to the control signal of the control unit 60, and the optical unit 30 adjusted the shape of the laser beam.

For example, the shape of the beam may be changed to various shapes such as a circular shape or an elliptical shape.

The beam mode may include a Gaussian beam mode and a non-Gaussian beam mode.

In this case, the processing object 11 was preprocessed in the Gaussian beam mode and the circular beam shape, and etching was performed for about 2 hours using a strong acid solution of about 5% to chemically remove only the micro-pattern formed in the de-crystallized region.

Accordingly, holes having a diameter of about 50 µm were processed at intervals of about 0.2 mm in horizontal and vertical directions to form 48 x 48, that is, a total of 2304 holes, and a micro-pattern was formed using the processing holes 12 implemented such that a ratio of the thickness of the processing object 11 to the diameter of the hole is 100:1.

In this case, as shown in FIGS. 5(a) to 5(c), the processing hole 12 may include a right-angled portion 13 along a left-right direction at a predetermined depth inside the processing object 11 as well as a linear shape along an up-down direction.

That is, the present invention may move the laser beam inside the processing object by controlling a focal length of the laser beam to process the processing hole having one or more right-angled portions horizontally along the left-right direction as well as a linear shape along the up-down direction inside the processing object.

In addition, the present invention may have the processing hole inclined by a preset angle from one surface of the processing object toward the opposite surface of the processing hole.

That is, the present invention may process micro-patterns of various three-dimensional shapes by processing the holes along various diameters and shapes, for example, in an inclined direction, by adjusting the beam mode of the laser beam, the shape of the laser beam, and the like, together with the depth at which the laser beam is irradiated.

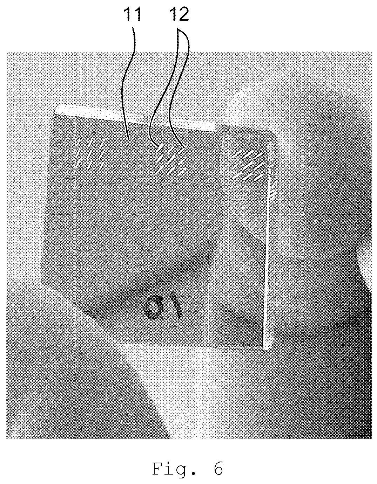

For example, FIGS. 6 to 8 are exemplary views of a processing object that is micro-processed according to the present invention.

In FIG. 6, a processing object had a thickness of about 5 mm, and a processing hole formed in the processing object had a diameter of about 20 µm to 80 µm.

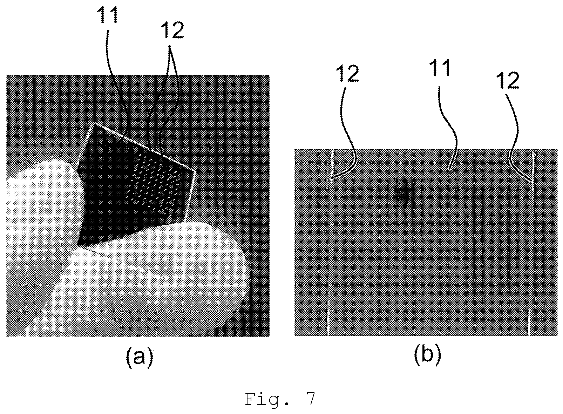

FIG. 7(a) shows a processing object that is micro-processed, and FIG. 7(b) shows an enlarged sectional view of a pair of processing holes formed in the processing object.

In FIGS. 7(a) and 7(b), a processing object had a thickness of about 2 mm, and a processing hole formed in the processing object had a diameter of about 40 µm.

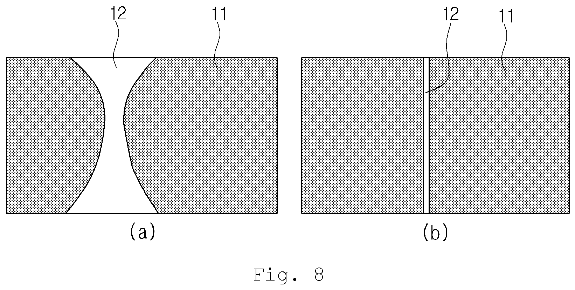

FIG. 8 is a view comparing processing objects that are processed according to the related art and the present invention.

FIG. 8(a) shows a cross-section of the processing object, in which a processing hole is processed according to the related art, and FIG. 8(b) shows a cross-section of the processing object, in which a processing hole is processed according to the present invention.

According to the related art, as shown in FIG. 8(a), as the reaction solution is not sufficiently injected into the processing hole 12 that is laser-processed, it can be confirmed that a central portion of the processing object 11 is processed to have a smaller diameter than upper and lower portions thereof, and thus the processing hole 12 is formed in a substantially cut-out shape.

Meanwhile, according to the present invention, as shown in FIG. 8(b), by irradiating the processing object 11 formed of a crystallized material, through which the laser beam passes, with a laser beam having high energy per unit volume and a very short pulse width, de-crystallizing the inside of the crystallized processing object while the laser beam is absorbed into the processing object, and increasing a reaction speed at which a chemical reaction with a reaction solution is performed in the de-crystallized region, it can be confirmed that the processing hole 12 formed in the processing object 11 is chemically removed by the chemical reaction and micro-processed.

As described above, the present invention may form processing holes having various shapes by controlling the focal length, wavelength, pulse width, beam mode, and beam shape of the laser beam, and may chemically remove the micro-pattern through a chemical reaction with an etching solution, so that it is possible to process patterns having various three-dimensional shapes at a high speed.

In addition, the present invention may process a very narrow hole, which has a very fine three-dimensional shape and a ratio of a thickness of the processing object to a diameter of the processing hole that is several times to tens of thousands of times, inside the crystallized object while minimizing cracks or damage to the processing object.

Although the present invention invented by the present inventor has been described in detail with reference to the embodiments, the present invention is not limited to the above embodiments, and various modifications are possible without departing from the scope and spirit of the present invention.

### Industrial Applicability

The present invention is applied to a technology for irradiating a processing object formed of a crystallized material with a laser beam, de-crystallizing an inside of the crystallized processing object while the laser beam is absorbed into the processing object, chemically removing a micro-pattern formed on a de-crystallized region by a chemical reaction, and performing micro-processing at a high speed.

## Claims

1. A micro-processing device using laser, the micro-processing device comprising:
a laser beam irradiation unit which forms a processing hole by irradiating a crystallized processing object, through which the laser beam passes, with a laser beam;
an optical unit which adjusts a shape of the laser beam such that the crystallized processing object is de-crystallized by the laser beam locally irradiated into the processing object;
a laser beam adjustment unit which adjusts a pulse width and pulse energy of the laser beam;
a transfer unit which moves the laser beam according to a micro-pattern; and
a control unit which controls driving of each unit,
wherein the processing hole formed in a de-crystallized region of the processing object is chemically removed through a chemical reaction using a chemical substance to be processed such that a ratio of a thickness of the crystallized processing object to a diameter of the processing hole is several times to tens of thousands of times,
wherein the processing object is formed of a transparent ceramic material, silicon, or a metal material,
wherein the laser beam is irradiated to the crystallized processing object, which allows the laser beam to pass therethrough, with preset energy per unit volume and a pulse width,
wherein the control unit generates a control signal for controlling driving of the laser beam irradiation unit and the optical unit so as to irradiate the laser beam by changing a shape of the laser beam, and the pulse width and pulse energy of the laser beam based on a processing condition of the processing object,
wherein the control unit controls to adjust a wavelength, the pulse width, and a beam mode of the laser beam, and the shape of the laser beam according to a material and a standard of the processing object, and
wherein the processing hole is formed in a linear shape directed from one surface of the processing object to which the laser beam is irradiated to an opposite surface of the processing object, includes one or more right-angled portions, or is inclined by a preset angle.

2. The micro-processing device of claim 1, wherein the chemical reaction is performed using a strongly acidic or strongly basic chemical substance.

3. The micro-processing device of claim 2, further comprising a chemical reaction furnace which precipitates the processing object to process the processing hole by the chemical reaction,
wherein the chemical reaction furnace applies ultrasonic vibration to the processing object at a preset cycle using an ultrasonic vibrator, and
the ultrasonic vibration is applied in a direction parallel to a direction of the processing hole formed in the processing object.

4. The micro-processing device of claim 3, wherein the chemical reaction furnace heats the reaction solution and a heating object to a preset temperature, which is previously set, using a heating unit so as to activate the reaction solution, and
the preset temperature is set to correspond to a melting point of a chemical component included in the reaction solution.

5. A micro-processing method using laser, the micro-processing method comprising:
(a) forming a processing hole by irradiating a crystallized processing object through which the laser beam passes, with a laser beam, using a laser beam irradiation unit;
(b) adjusting a shape of the laser beam such that to the crystallized processing object is de-crystallized by the laser unit locally irradiated into the processing object the crystallized processing object, using an optical unit;
(c) adjusting a pulse width and pulse energy of the laser beam using a laser beam adjustment unit;
(d) precipitating the processing object in a chemical reaction furnace in which the reaction solution is accommodated to chemically remove the processing hole, which is formed in a de-crystallized region, through a chemical reaction caused by the reaction solution; and
(e) moving the laser beam to a pattern, in which the processing hole is to be formed, using a transfer unit,
wherein in a process of performing (a) to (e), a control unit controls driving of the laser beam irradiation unit, the optical unit, and the transfer unit to irradiate the laser beam by changing a shape of the laser beam, and the pulse width and pulse energy of the laser beam based on a processing condition of the processing object,
wherein the processing object is formed of a transparent ceramic material, silicon, or a metal material,
wherein the laser beam is irradiated to the crystallized processing object, which allows the laser beam to pass therethrough, with preset energy per unit volume and a pulse width,
wherein in (c), the control unit controls to adjust a wavelength, the pulse width, and a beam mode of the laser beam, and the shape of the laser beam according to a material and a standard of the processing object,
wherein the processing hole is processed such that a ratio of a thickness of the processing object to a diameter of the processing hole is several times to tens of thousands of times, and
wherein the processing hole is formed in a linear shape directed from one surface of the processing object to which the laser beam is irradiated to an opposite surface thereof, includes one or more right-angled portions, or inclined by a preset angle.

6. The micro-processing method of claim 5, wherein the chemical reaction is performed using a strongly acidic or strongly basic chemical substance.

7. The micro-processing method of claim 6, wherein in (d), the chemical reaction furnace applies ultrasonic vibration to the processing object at a preset cycle using an ultrasonic vibrator, and
the ultrasonic vibration is applied in a direction parallel to or perpendicular to a direction of the processing hole formed in the processing object.

8. The micro-processing method of claim 7, wherein the chemical reaction furnace heats the reaction solution and a heating object at a preset temperature, which is previously set, using a heating unit so as to activate the reaction solution, and
the preset temperature is set to correspond to a melting point of a chemical component included in the reaction solution.
